# EUROPEAN PATENT APPLICATION

(11) **EP 4 807 891 A1**
(43) Date of publication of application: **16.09.2026**
(21) Application number: 25738831.4
(22) Date of filing: 08.01.2025
(51) Int. Cl.: H01M 50/593, H01M 50/578, H01M 50/204, H01M 50/507, H01M 10/42, H01M 50/251

(54) **CELL MODULE ASSEMBLY, BATTERY PACK, AND ENERGY STORAGE SYSTEM**

(30) Priority: 12.01.2024 KR 20240005424
(71) Applicant: LG Energy Solution, Ltd., Seoul 07335 (KR)
(72) Inventor: LEE, Dong Geun, Daejeon 34122 (KR); KIM, Kiyoun, Daejeon 34122 (KR); JEONG, Gyeongsu, Daejeon 34122 (KR); LEE, Seongju, Daejeon 34122 (KR); KIM, Minju, Daejeon 34122 (KR)
(74) Representative: Plasseraud IP
(86) International application number: PCT/KR2025/000368
(87) International publication number: WO 2025/150864

(57) **Abstract**

A cell module assembly according an embodiment of the present disclosure may comprise a battery cell stack in which a plurality of battery cells are stacked; and a barrier unit disposed between at least one of the plurality of battery cells and at least one of the other battery cells, wherein the barrier unit comprises a plurality of support plates and a first buffer member interposed between adjacent support plates.

## Description

### TECHNICAL FIELD

### Cross Citation with Related Application(s)

This application claims priority to and the benefit of Korean Patent Application No. 10-2024-0005424, filed on January 12, 2024, the disclosure of which is incorporated herein by reference in its entirety.

The present disclosure relate to a cell module assembly, a battery pack and an energy storage system, and more particularly, to a cell module assembly, a battery pack and an energy storage system, comprising an barrier unit for preventing thermal transfer between battery cells when a thermal event occurs in the battery cells.

### BACKGROUND

Currently commercialized secondary batteries include a nickel cadmium battery, a nickel hydrogen battery, a nickel zinc battery, a lithium secondary battery, and the like. Of these batteries, lithium secondary batteries are emerging as the most popular, as they almost do not suffer from the memory effect, and therefore, are freely chargeable/dischargeable, have low self-discharge rates, and have high energy density, as compared to nickel-based secondary batteries.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate, each being coated with the positive electrode active material and the negative electrode active material, are disposed with a separator being interposed between them, and an exterior case, i.e., a battery case which seals and houses the electrode assembly together with an electrolyte.

In general, depending on the shape of exterior cases, the lithium secondary battery may be classified into a can-type secondary battery in which the electrode assembly is incorporated into a metal can, and a pouch-type secondary battery in which the electrode assembly is incorporated into in a pouch made of an aluminum laminate sheet,

Such secondary batteries have been widely used in medium and large devices such as electric vehicles and energy storage systems (ESSs), as well as in small devices such as portable electronic devices, and the extent of their use is rapidly increasing. Furthermore, in recent years, there has been a growing trend in the use of battery packs for power storage purposes, not only for vehicles but also for residential applications.

There is a continuing need for cell module assemblies that ensure stability even when a thermal event occurs in the battery cells, and battery packs including such assemblies.

### DETAILED DESCRIPTION OF THE INVENTION

### Technical Problem

Therefore, it is an object of the present disclosure to provide a cell module assembly, a battery pack and an energy storage system, comprising an barrier unit for preventing thermal transfer between battery cells when a thermal event occurs in the battery cells.

In addition, it is an object of the present disclosure to provide a method for further enhancing the thermal transfer preventive effect of a barrier unit included in a cell module assembly, a battery pack, and an energy storage device.

However, the technical objects to be solved by embodiments of the present disclosure are not limited to the above-described objects, and other objects not mentioned herein will be understood from the following description by those skilled in the art.

### Technical Solution

In an illustrative aspect of the present disclosure, provided is a cell module assembly comprising: a battery cell stack in which a plurality of battery cells are stacked; and a barrier unit disposed between at least one of the plurality of battery cells and at least another one of the plurality of battery cells, wherein the barrier unit comprises a plurality of support plates and a first buffer member interposed between adjacent support plates.

The support plate has a plate shape, and may be made of a rigid and fire resistant material, and the first buffer member has a plate shape, and may be made of a compressible material.

The support plate may be a metal plate, and the first buffer member may be a silicone pad.

The support plate may prevent heat transfer to adjacent battery cells when a thermal event occurs in the battery cell, and the first buffer member may be compressible between the support plates due to pressure applied to the barrier unit when the battery cell swells.

The support plates may be formed as a pair, and the first buffer member may beinterposed between the pair of support plates.

The barrier unit further comprises a pair of second buffer members, and the pair of second buffer members may be respectively disposed on the outermost side of the barrier unit.

The second buffer member has a plate shape, and may be made of a compressible material.

The second buffer member may be a silicone pad.

The second buffer member may be compressible and deformable in accordance with the outer surface of the battery cells that are swelled when the battery cell swells.

The barrier unit may be composed of the second buffer member, the support plate, the first buffer member, the support plate, and the second buffer member in this order.

The first buffer member and the second buffer member may be made of the same material.

At least one protrusion may be provided at the lower end of the support plate.

The thicknesses of the plurality of support plates may be equal to each other.

The cell module assembly may further comprise: a pair of busbar housings that comprise openings through which the electrode leads of the battery cells pass, and is disposed on both side surfaces of the battery cell stack; and a pair of end plates that connect the both ends of the pair of busbar housings, respectively.

In another illustrative aspect of the present disclosure, provided is a battery pack comprising: the cell module assembly according to the above-described embodiments; an electrical unit that comprises a Battery Management System (BMS) disposed on one surface of the cell module assembly; and a pack case that houses the cell module assembly and the electrical unit.

In yet another illustrative aspect of the present disclosure, provided is an energy storage system comprising the battery pack according to the above-described embodiments.

### Advantageous Effects

According to specific embodiments of the present disclosure, even if a thermal event occurs inside the battery pack, i.e., if a problem such as thermal runaway or fire occurs in some battery cells, it is possible to effectively prevent such issues from transferring to other battery cells.

Also, it is possible to more effectively enhance thermal transfer preventive effects of the barrier unit included in the cell module assembly, battery pack, and energy storage system.

Further, according to embodiments of the present disclosure, it is possible to provide a cell module assembly, battery pack and energy storage system that has a simple structure and have enhanced stability when a thermal event occurs in a battery cell.

In addition, various additional effects can be achieved by various embodiments of the present disclosure. Various effects of the present disclosure will be described in detail in each embodiment, or descriptions of effects that can be easily understood by those skilled in the art will be omitted.

### [BRIEF DESCRIPTION OF THE DRAWING]

FIG. 1 is a perspective view of a cell module assembly including a barrier unit according to an embodiment of the present disclosure.
FIG. 2 is an exploded perspective view showing a state in which the barrier unit in FIG. 1 is separated.
FIG. 3 is a perspective view showing only the barrier unit included in the cell module assembly of FIG. 1.
FIG. 4 is an exploded perspective view of the barrier unit of FIG. 3.
FIG. 5 is a top view of the barrier unit of FIG. 3.
FIG. 6 is a reference diagram of the barrier unit of FIG. 3.
FIG. 7 shows a case where the cell module assembly and the electric unit of FIGS. 1 to 6 are housed in a pack case to form a battery pack.
FIG. 8 shows a completed battery pack in which the respective components of the battery pack of FIG. 7 are assembled.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not necessarily mean the certain part "above" or "on" in an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, embodiments of the present disclosure will be described with reference to the accompanying drawings.

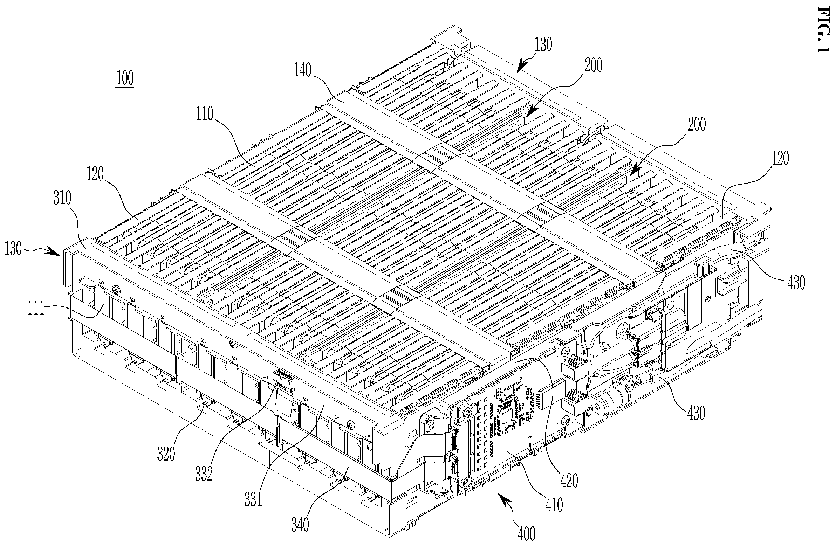

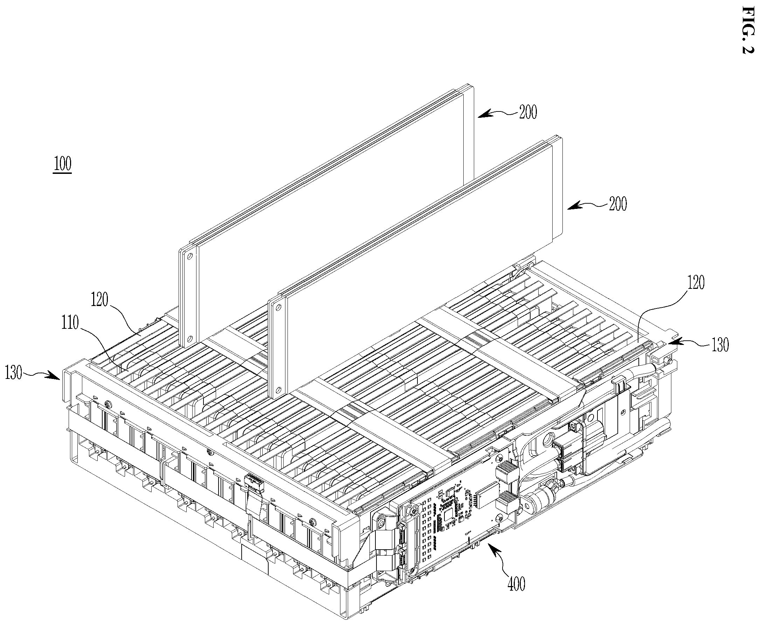

FIG. 1 is a perspective view of a cell module assembly 100 including a barrier unit according to an embodiment of the present disclosure. FIG. 2 is an exploded perspective view showing a state in which the barrier unit in FIG. 1 is separated.

Referring to FIGS. 1 and 2, a plurality of battery cells 110 are provided to form a battery cell stack. The cell module assembly 100 includes the battery cell stack, an end plate 120, and a busbar housing assembly 130. Further, the cell module assembly 100 according to an embodiment of the present disclosure includes a barrier unit 200. The barrier unit 200 will be described in more detail below.

First, a pair of end plates 120 are respectively provided on the outermost side of the battery cell stack. The end plates 120 are disposed in parallel with the battery cells 110. Further, a pair of busbar housing assemblies 130 are disposed on the surface toward which the electrode leads 111 of each battery cell 110 of the battery cell stack face. In the embodiment of FIG. 1, a pair of busbar housing assemblies 130 are disposed on both side surfaces of the battery cell stack. Each busbar housing assembly 130 is disposed in a direction orthogonal to the length direction of the battery cells 110. Further, a pair of end plates 120 are disposed on the front and rear surfaces of the battery cell stack, respectively. Both ends of each of the pair of busbar housing assemblies 130 are connected to the pair of end plates 120, respectively.

The end plate 120 may be made of, for example, a metal material, for example, aluminum, iron, or a stainless steel. The busbar housing assembly 130 includes a busbar housing 310 in which busbar electrodes 320 and an ICB (Inter Connector Board) 330 are disposed, and the busbar housing 310 may be made of, for example, a plastic material and may be fabricated by plastic injection molding.

A pair of busbar housing assemblies 130 are disposed on both side surfaces of a plurality of battery cell stacks. The busbar housing assembly 130 includes a busbar housing 310, a plurality of busbar electrodes 320 disposed on the busbar housing 310, and an ICB 330.

A busbar electrode 320 is disposed on the outer surface of the busbar housing 310, and a plurality of openings are provided near the locations where the busbar electrodes 320 are disposed. The electrode leads 111 of the battery cells 110 pass through the openings of the busbar housing assembly 130 and are connected to the busbar electrodes 320. For reference, in the drawings of the present disclosure, the electrode leads 111 of adjacent battery cells 110 are connected to each other by passing through openings formed in the busbar housing 310, and the busbar electrodes 320 are coupled thereon.

In addition, an ICB 330 is disposed on the outer surface of the busbar housing 310. In an embodiment of the present disclosure, the ICB 330 is disposed on an upper part of the busbar electrode 320.

The ICB 330 transmits sensing data between the battery cell 110 and the BMS 410. The ICB 330 is a substrate equipped with at least one element for transmitting sensing data, and includes a printed circuit board (PCB) 331 having a circuit pattern formed on an insulating layer and a sensing cable connector 332 to which a sensing cable 340 is connected. The ICB 330 senses electric current and/or voltage in the battery cell 110 and transmits the sensed data to the BMS 410 via the sensing cable 340. Furthermore, the BMS 410 transmits data for maintaining and managing the battery cell 110 to the ICB 330 via the sensing cable 340, and ultimately controls the battery cell 110 electrically connected to the ICB 330.

Each of the upper and lower sides between a pair of end plates 120 may include at least one strap 140 for connecting between the pair of end plates 120. The strap 140 strengthens the binding of the cell module assembly 100. More specifically, it strengthens the binding of the pair of end plates 120, and the plurality of battery cell stacks disposed therebetween, and the barrier unit 200. Thereby, it is possible to prevent distortion in the alignment of the plurality of battery cell stacks. It is also possible to prevent distortion in the alignment of the barrier unit 200 disposed between the plurality of battery cell stacks.

The barrier unit 200 is disposed in contact with a large area of the battery cell 110 and is disposed between adjacent battery cells 110. The barrier unit 200 may be disposed in parallel with the battery cell 110. For reference, a buffer member (not shown), such as a silicone pad, may be disposed between the outermost battery cell 110 of the battery cell stack and the end plate 120. In some cases, the barrier unit 200 may also be disposed between the outermost battery cell 110 of the battery cell stack and the end plate 120. The barrier unit 200 may cut off flames or sparks emitted from a battery cell 110 where a thermal event of battery cell 110 has occurred from propagating to adjacent battery cells 110, thereby prevents thermal runaway between cells. The barrier unit 200 may be disposed between the plurality of battery cells 110. An embodiment of FIGS. 1 and 2 shows a case where an barrier unit 200 is disposed for every six battery cells 110. The present disclosure is not limited to those shown in the figure, and various modifications and variations can be made to the embodiment.

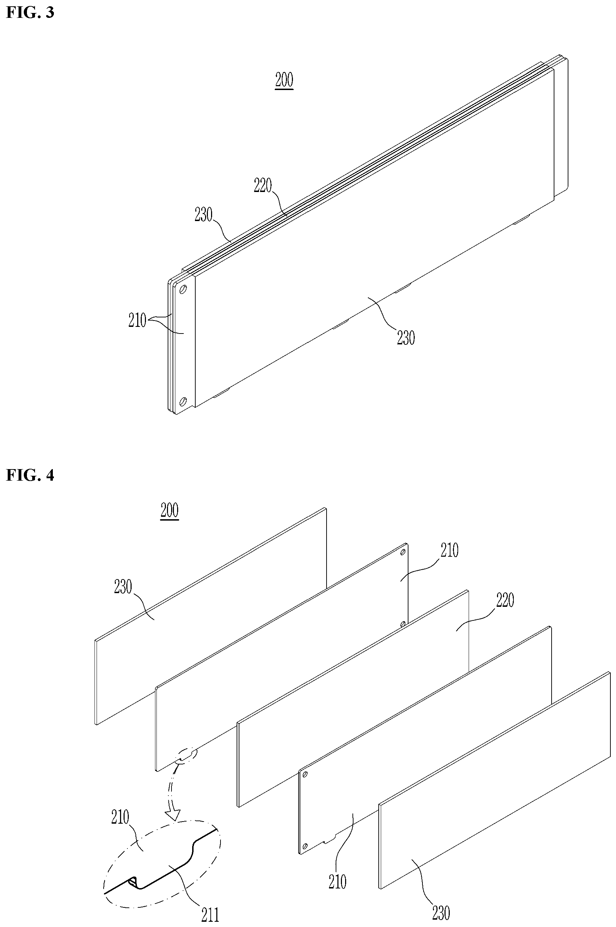

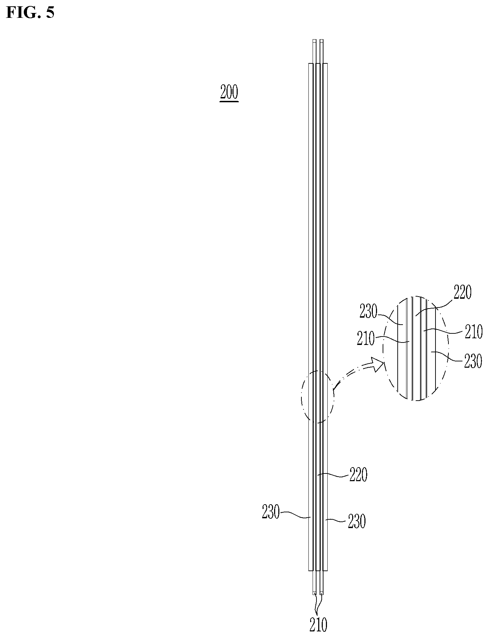

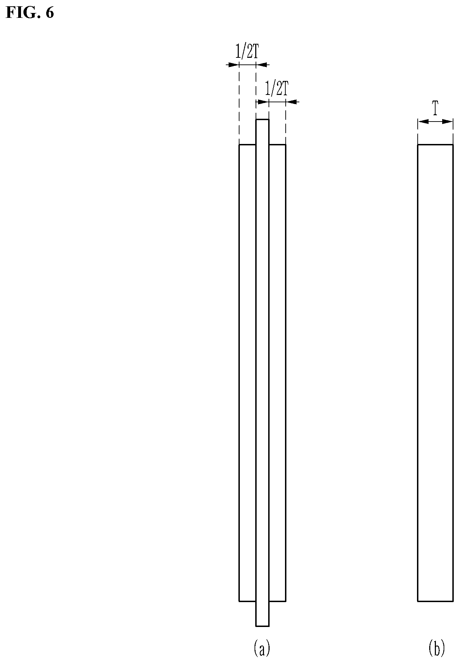

FIG. 3 is a perspective view showing only the barrier unit included in the cell module assembly of FIG. 1. FIG. 4 is an exploded perspective view of the barrier unit of FIG. 3. FIG. 5 is a top view of the barrier unit of FIG. 3. FIG. 6 is a reference diagram of the barrier unit of FIG. 3.

First, as described above, the barrier unit 200 may be included in plural numbers, depending on the size of the battery cell stack and the number of battery cells 110. Further, the barrier unit 200 may be stacked together with the battery cells 110 to form the cell module assembly 100.

Referring to FIGS. 3 to 5, the barrier unit 200 according to an embodiment of the present disclosure includes at least two support plates 210 and a first buffer member 220 interposed between adjacent support plates 210. In addition, the barrier unit 200 may further include a pair of second buffer members 230 disposed on the outermost side of the barrier unit 200.

First, according to the barrier unit 200 of the present disclosure, at least two support plates 210 are provided, mutually adjacent support plates are spaced apart through a first buffer member 220 interposed therebetween. Each of the support plates 210 and the first buffer member 220 may have a plate shape. Each of the second buffer members 230 may also have a plate shape.

The support plate 210 is made of a rigid and fire-resistant material. When a thermal event occurs in the battery cell 110, the support plate 210 prevents heat transfer to adjacent battery cells 110 or propagation of flames, sparks, etc., while it maintains the structure and rigidity of the barrier unit 200 even at high temperatures, thereby preventing deformation of the barrier unit 200.

The lower end of the support plate 210 may be further provided with at least one protrusion 211. This results in a structure in which the battery cell stack, consisting of the battery cells 110 and the barrier unit 200, is supported from below by the protrusion 211 of the support plate 210 of the barrier unit 200. Since the bottom surface of the battery cell stack is supported by the protrusion 211, the battery cell stack can be prevented from sagging downward. For more detail, as the size and weight of the battery cell stack increases, the center of the battery cell stack may sag downward (there is a risk that the battery cell stack may bend downward as a whole). However, according to the present disclosure, the protrusion 211 is provided at the lower end of the support plate 210 of the barrier unit 200, so that the bottom surface of the battery cell stack is supported upward, and thus the battery cell stack can remain flat as a whole. When barrier units 200 is provided in plural number in a battery cell stack, the protrusions 211 are also provided in plural numbers, resulting in a structure in which the bottom surface of the battery cell stack is evenly supported by the plurality of protrusions 211 to distribute and support the weight of the battery cell stack. Of course, in the case where the support plate 210 of the barrier unit 200 is provided with a plurality of protrusions 211, and, preferably, the plurality of protrusions 211 are provided in a symmetrical structure, the bottom surface of the battery cell stack will be evenly supported by the plurality of protrusions 211, resulting in a structure in which the bottom surface of the battery cell stack is evenly supported by the plurality of protrusions 211. However, the present disclosure is not limited to those shown in the figure, and various modifications and variations may be made to the embodiments.

The support plate 210 may be made of, for example, a metal material, a plastic material, or a combination thereof. The metal material may be, for example, aluminum, iron, stainless steel, or a combination thereof. The support plate 210 is sufficient if it is a material that has rigidity and structural stability even in high-temperature environments, such as thermal events of the battery cell 110, and may be selected in accordance with the environment in which the present disclosure is realized.

The first buffer member 220 interposed between adjacent support plates 210 may be made of silicone, plastic, or a combination thereof. The first buffer member 220 has appropriate elasticity and can be compressed when the battery cell 110 swells, thereby absorbing the pressure applied to the barrier unit 200. In the case of plastic material, it may be made of, for example, a flexible plastic. When the battery cell 110 swells, the swollen battery cell 110 presses the barrier unit 200, and at this time, the first buffer member 220 may act as a buffer.

Similarly, the pair of second buffer members 230 disposed on the outermost side of the barrier unit 200 may also be made of silicone, plastic, or a combination thereof. The second buffer members 230 have appropriate elasticity and can be compressed and deformed in correspondence with the outer surface of the battery cell 110 that is swollen when the battery cell 110 swells. That is, the second buffer member may be concavely deformed and compressed in correspondence with the convex surface of the swollen battery cell 110, thereby absorbing the pressure applied to the barrier unit 200. In the case of plastic material, it may be made of, for example, a flexible plastic. When the battery cell 110 swells, the swollen battery cell 110 presses against the barrier unit 200, and at this time, the first buffer member 220 may act as a buffer.

The first buffer member 220 and the second buffer member 230 may be made of the same material, or, optionally, may be made of different materials. If both the first buffer member 220 and the second buffer member 230 are made of the same material, both the first buffer member 220 and the second buffer member 230 may be made of, for example, a silicone pad.

An adhesive material may be used to bond between the support plate 210 and the first buffer member 220, as well as between the support plate 210 and the second buffer member 230.

The embodiment of FIG. 3 shows a case in which the barrier unit 200 includes two support plates 210, with one second buffer member 230 being interposed between the two support plates 210. Additionally, the embodiment shows a case in which the barrier unit 200 includes one second buffer member 230 on each of the outermost sides.

For further detail, the embodiment of FIG. 3 shows a case where the barrier unit 200 has a five-layer structure of second buffer member 230 - support plate 210 - first buffer member 220 - support plate 210 - second buffer member 230.

FIG. 6 is a reference diagram of the barrier unit of FIG. 3, wherein FIG. 6(a) shows a schematic diagram of a support plate of the barrier unit of the present disclosure, and FIG. 6(b) shows a schematic diagram of a support plate of a barrier unit in the prior art as a comparative example.

In the prior art, it was common for a barrier unit 200 to have a single support plate 210. However, in an embodiment of the present disclosure, the barrier unit 200 is configured such that a plurality of support plates 210 are spaced apart from each other with a first buffer member 220 interposed therebetween.

Compared to the case where the barrier unit in the prior art includes one support plate (see FIG. 6(b)), in the case where it includes n (e.g., two) support plates 210 as in the barrier unit 200 of the present disclosure, with the thickness of each support plate 210 being 1/n (e.g., 1/2) of the thickness of the support plate in the prior art, and with the first buffer member 220 being interposed therebetween, the thermal barrier effect (or thermal transfer preventive effect) is further enhanced (see FIG. 6(a)). Since the first buffer member 220 is interposed between adjacent support plates 210, it is possible to more effectively prevent heat transfer from one support plate 210 to the other.

For more detail, assuming that the same amount of material is used to form the support plates in both the present disclosure and the prior art, the present disclosure, which includes n support plates 210 each having 1/n thickness, has a better thermal barrier effect (heat transfer preventive effect) than the prior art, which includes one support plate having one thickness.

On the other hand, for example, the thicknesses of the plurality of support plates 210 may be equal to each other. Similarly, when the first buffer members 220 are provided in plural numbers, the thicknesses of the first buffer members 220 may be equal to each other. Similarly, the thicknesses of the pair of second buffer members 230 disposed at the outermost sides may be equal to each other. The thicknesses of the first buffer members 220 and the second buffer members 230 may also be equal to each other. However, the present disclosure is not necessarily limited thereto, and the dimensions can be modified and changed in various ways in accordance with the environment in which the present disclosure is realized.

The length of the support plate 210 may be equal to or larger than the length of the first buffer member 220 and/or the second buffer member 230. Therefore, as described above, the overall structure of the cell module assembly 100 can be maintained even during welding pressure application or against external physical impacts during normal operation. The length of the support plate 210 may be equal to or larger than the length of the first buffer member 220 and/or the second buffer member 230. However, the present disclosure is not necessarily limited thereto, and the dimensions may be modified and changed in various ways in accordance with the environment in which the present disclosure is realized.

The height of the support plate 210 may be equal to or larger than the height of each of the first buffer member 220 and/or the second buffer member 230. However, the present disclosure is not necessarily limited thereto, and the dimensions may be varied and modified in various ways in accordance with the environment in which the present disclosure is realized.

Referring again to FIG. 1, the electrical unit 400 will be briefly described. The electrical unit 400 is disposed on one surface of the cell module assembly 100 (in the embodiment of FIG. 1, the front surface of the cell module assembly 100). The example of FIG. 1 shows a case where the electrical unit 400 is disposed on the outer surface of the end plate 120 disposed on the front surface of the cell module assembly 100. The electrical unit 400 includes a BMS 410, an electrical unit housing 420 that houses each component of the electrical unit 400 (such as the BMS 410, a power cable 430, etc.), and a power cable 430. The BMS 410 includes a connector terminal 411 for electrical connection with the sensing cable 340. The electric unit 400 may include various components for controlling or managing the charging and discharging of the battery pack, such as relays, fuses, and current sensors. Each component of the electric unit 400 can be realized by adopting an electrical unit provided in a typical battery pack, and therefore, a further detailed description of the electrical unit 400 will be omitted.

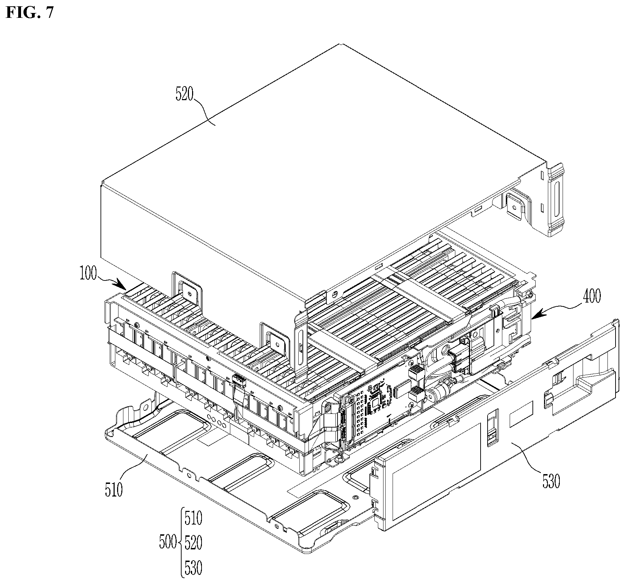

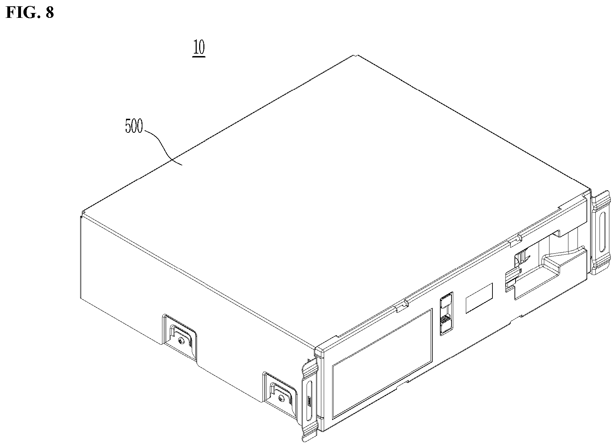

FIG. 7 shows a case where the cell module assembly and the electric unit of FIGS. 1 to 6 are housed in a pack case to form a battery pack. FIG. 8 shows a completed battery pack in which the respective components of the battery pack of FIG. 7 are assembled.

The battery pack 10 includes the cell module assembly 100 and the electrical unit 400 described above with reference to FIGS. 1 to 6, and the cell module assembly 100 and the electrical unit 400 are housed inside a pack case 500. The battery pack 10 according to an embodiment of the present disclosure includes a barrier unit 200, as described above with reference to FIGS. 1 to 6.

The pack case 500 includes a lower case member 510 and an upper case member 520. The lower case member 510 and the upper case member 520 are coupled to surround the outer side of the cell module assembly 100. For example, the lower case member 510 may have a generally flat plate shape. For example, the upper case member 520 may have a U-shaped frame shape. This may be a structure in which the cell module assembly 100 is seated on the flat plate-shaped lower case member 510, and the upper case member 520 covers the cell module assembly 100.

However, the present disclosure is not limited to those described above, and various modifications and variations may be made, such as the lower case member 510 and the upper case member 520 each being an L-shaped frame or a roll-pressed mono frame.

In addition, the pack case 500 further includes a front cover 530 disposed on the front surface of the cell module assembly 100 and the electrical unit 400.

An insulating sheet (not shown) having electrically insulation properties is provided between the cell module assembly 100 and the lower case member 510. An insulating sheet (not shown) having electrical insulation properties is provided between the cell module assembly 100 and the upper case member 520. The insulating sheet may be, for example, a film made of PC (polycarbonate), PET, PP, or a combination thereof.

In addition, an energy storage system (ESS) according to the present disclosure includes one or more of the above-mentioned battery packs according to the present disclosure. Furthermore, the energy storage system according to the present disclosure may further include general components included in the energy storage system, in addition to such a battery pack.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

10: battery pack
100: cell module assembly
110: battery cell
111: electrode lead
120: end plate
130: busbar housing assembly
140: strap
200: barrier unit
210: support plate
220: first buffer member
230: second buffer member
310: busbar housing
320: busbar electrode
330: ICB
331: printed circuit board
332: sensing cable connector
340: sensing cable
400: electrical unit
410: BMS
420: electrical unit housing
430: power cable
500: pack case
510: lower case member
520: upper case member
530: front cover

## Claims

1. A cell module assembly comprising:
a battery cell stack in which a plurality of battery cells are stacked; and
a barrier unit disposed between at least one of and at least another one of the plurality of battery cells,
wherein the barrier unit comprises a plurality of support plates and a first buffer member interposed between adjacent support plates.

2. The cell module assembly of claim 1,
wherein the support plate has a plate shape, and is made of a rigid and fire resistant material, and
the first buffer member has a plate shape, and is made of a compressible material.

3. The cell module assembly of claim 2,
wherein the support plate is a metal plate, and
the first buffer member is a silicone pad.

4. The cell module assembly of claim 1,
wherein the support plate prevents heat transfer to adjacent battery cells when a thermal event occurs in the battery cell, and
the first buffer member is compressible between the support plates due to pressure applied to the barrier unit when the battery cell swells.

5. The cell module assembly of claim 1,
wherein the support plates are formed as a pair, and
the first buffer member is interposed between the pair of support plates.

6. The cell module assembly of claim 1,
wherein the barrier unit further comprises a pair of second buffer members, and the pair of second buffer members are respectively disposed on the outermost side of the barrier unit.

7. The cell module assembly of claim 6,
wherein the second buffer member has a plate shape, and is made of a compressible material.

8. The cell module assembly of claim 7,
wherein the second buffer member is a silicone pad.

9. The cell module assembly of claim 6,
wherein the second buffer member is compressible and deformable in correspondence with the outer surface of the battery cells that are swelled when the battery cell swells.

10. The cell module assembly of claim 6,
wherein the barrier unit is composed of the second buffer member, the support plate, the first buffer member, the support plate, and the second buffer member in this order.

11. The cell module assembly of claim 6,
wherein the first buffer member and the second buffer member are made of the same material.

12. The cell module assembly of claim 1,
wherein at least one protrusion is provided at the lower end of the support plate.

13. The cell module assembly of claim 1,
wherein the thicknesses of the plurality of support plates is equal to each other.

14. The cell module assembly of claim 1, further comprising:
a pair of busbar housings that comprise openings through which the electrode leads of the battery cells pass, and is disposed on both side surfaces of the battery cell stack; and
a pair of end plates that connect the both ends of the pair of busbar housings, respectively.

15. A battery pack comprising:
the cell module assembly as set forth in claim 1;
an electrical unit that comprises a Battery Management System BMS disposed on one surface of the cell module assembly; and
a pack case that houses the cell module assembly and the electrical unit.

16. An energy storage system comprising the battery pack as set forth in claim 15.
